(19) Europäisches Patentamt
European Patent Office
Office européen des brevets

(11) **EP 3 637 214 A1**

(12) **EUROPEAN PATENT APPLICATION**
published in accordance with Art. 153(4) EPC

(43) Date of publication:
**15.04.2020 Bulletin 2020/16**

(51) Int Cl.:
***G05D 1/10*** *(2006.01)*

(21) Application number: **17935486.5**

(22) Date of filing: **18.12.2017**

(86) International application number:
**PCT/CN2017/117036**

(87) International publication number:
**WO 2019/119240 (27.06.2019 Gazette 2019/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **SZ DJI Technology Co., Ltd.**
**Shenzhen, Guangdong 518057 (CN)**

(72) Inventors:
• **WANG, Junxi**
**Shenzhen, Guangdong 518057 (CN)**

• **WANG, Chunming**
**Shenzhen, Guangdong 518057 (CN)**
• **WU, Xumin**
**Shenzhen, Guangdong 518057 (CN)**
• **SHI, Renli**
**Shenzhen, Guangdong 518057 (CN)**

(74) Representative: **Appelt, Christian W.**
**Boehmert & Boehmert**
**Anwaltspartnerschaft mbB**
**Pettenkoferstrasse 22**
**80336 München (DE)**

(54) **UNMANNED AERIAL VEHICLE CONTROL METHOD AND UNMANNED AERIAL VEHICLE**

(57) A method for controlling an unmanned aerial vehicle, and an unmanned aerial vehicle thereof are provided. The method includes: determining a first relative height between the unmanned aerial vehicle and a ground reflector directly below the unmanned aerial vehicle and a second relative height between the unmanned aerial vehicle and a ground reflector ahead the unmanned aerial vehicle; determining a combined relative height for reflecting a front terrain change according to at least the first relative height and the second relative altitude; and controlling a flying attitude of the unmanned aerial vehicle according to the combined relative altitude. The present disclosure allows a UAV to complete the terrain following function well when the flying speed is too fast or the terrain is quite undulating.

FIG. 1

**Description**

**TECHNICAL FIELD**

The present disclosure relates to the field of flight technology and, more particularly, to a method for controlling an unmanned aerial vehicle and an unmanned aerial vehicle thereof.

**BACKGROUND**

In some applications of unmanned aerial vehicles (UAVs), UAVs may rely on radar to provide reliable ground height and other data, and maintain the distance from ground reflectors through the data processing and control by a flight controller.

In the existing technologies, the radar of a UAV is usually mounted directly below the UAV to conveniently determine the relative distance between the UAV and the ground reflectors directly below it, so as to achieve a flight with a fixed height. When a UAV is in the process of automatic height processing, if the flight speed is slow or the terrain is relatively flat, the terrain following function may complete well. When the flight speed is too fast or the terrain is quite undulating, due to the usual time delay between the acquisition of the measured data and the eventual execution by the propulsion system, the height cannot be controlled in real time according to the relative distance measured by the radar. This causes the fixed height effects to always lag behind, and thus the terrain following function cannot complete well.

Accordingly, when the flying speed is too fast or the terrain is quite undulating, how to make sure that a UAV can complete the terrain following function well has become a problem that needs to be addressed.

**SUMMARY**

The present disclosure provides a method for controlling a UAV and a UAV thereof, which is applied to solve the problem in the existing technologies that, when the flying speed is too fast or the terrain is quite undulating, it cannot be ensured that a UAV can complete the terrain following function well.

In one aspect, the present disclosure provides a method for controlling a UAV. The method includes:

determining a first relative height between the UAV and a ground reflector directly below the UAV and a second relative height between the UAV and a ground reflector ahead the UAV;
determining, according to at least the first relative height and the second relative height, a combined relative height for reflecting a front terrain change; and
controlling the flight attitude of the UAV according to the combined relative height.

In another aspect, the present disclosure provides a UAV. The UAV includes a controller. The controller is configured to:

determine a first relative height between the UAV and a ground reflector directly below the UAV and a second relative height between the UAV and a ground reflector ahead the UAV;
determine, according to at least the first relative height and the second relative height, a combined relative height for reflecting a front terrain change; and
control the flight attitude of the UAV according to the combined relative height.

In the UAV control method and the UAV provided by the present disclosure, by determining a first relative height between the UAV and a ground reflector directly below the UAV and a second relative height between the UAV and a ground reflector ahead the UAV, a combined relative height for reflecting a front terrain change is determined according to at least the first relative height and the second relative height. The flight attitude of the UAV is then controlled according to the combined relative height, thereby accomplishing the control of the flight attitude of the UAV according to the combined relative height reflecting the front terrain change. This then allows the UAV to be able to complete the terrain following function well, even if the flight speed is too fast or the terrain is quite undulating.

**BRIEF DESCRIPTION OF THE DRAWINGS**

To make the technical solutions in the embodiments of the present disclosure clearer, a brief introduction of the accompanying drawings consistent with the descriptions of the existing technologies or the disclosed embodiments will be provided hereinafter. It is to be understood that the following described drawings are merely some embodiments of the present disclosure. Based on the accompanying drawings and without creative efforts, persons of ordinary skill in the art may derive other drawings.

FIG. 1 is a flowchart of a method for controlling an unmanned aerial vehicle according to one embodiment of the present disclosure;

FIG. 2 is a schematic diagram for determining a second relative height according to one embodiment of the present disclosure;

FIG. 3 is a flowchart of a method for controlling an unmanned aerial vehicle according to another embodiment of the present disclosure;

FIG. 4A is a flow diagram of a method for controlling an unmanned aerial vehicle according to one embodiment of the present disclosure;

FIG. 4B is a schematic diagram showing a relationship between a first relative height, a second relative height, and a combined relative height according to one embodiment of the present disclosure;

FIG. 5 is a flowchart of a method for controlling an unmanned aerial vehicle according to yet another embodiment of the present disclosure;

FIG. 6 is a flow diagram of a method for controlling an unmanned aerial vehicle according to another embodiment of the present disclosure;

FIG. 7 is a schematic diagram of an unmanned aerial vehicle according to one embodiment of the present disclosure;

FIG. 8 is a schematic structural diagram of an unmanned aerial vehicle according to one embodiment of the present disclosure; and

FIG. 9 is a schematic structural diagram of an unmanned aerial vehicle according to another embodiment of the present disclosure.

## DETAILED DESCRIPTION OF THE EMBODIMENTS

To make the objective, technical solutions, and advantages of the present disclosure clearer, the technical solutions of the embodiments of the present disclosure will be made in detail hereinafter with reference to the accompanying drawings of the disclosed embodiments. Apparently, the disclosed embodiments are merely some, but not all, of the embodiments of the present disclosure. Various other embodiments obtained by a person of ordinary skills in the art based on the embodiments of the present disclosure without creative efforts still fall within the protection scope of the present disclosure.

The present disclosure is applied to a UAV, which may implement an automatic fixed height adjustment to solve the problem in the existing technologies, that is, when the flying speed is too fast or the terrain is quite undulating, because the propulsion system has a hysteresis effect, the fixed height effects always lag behind, and thus the terrain following function cannot complete well.

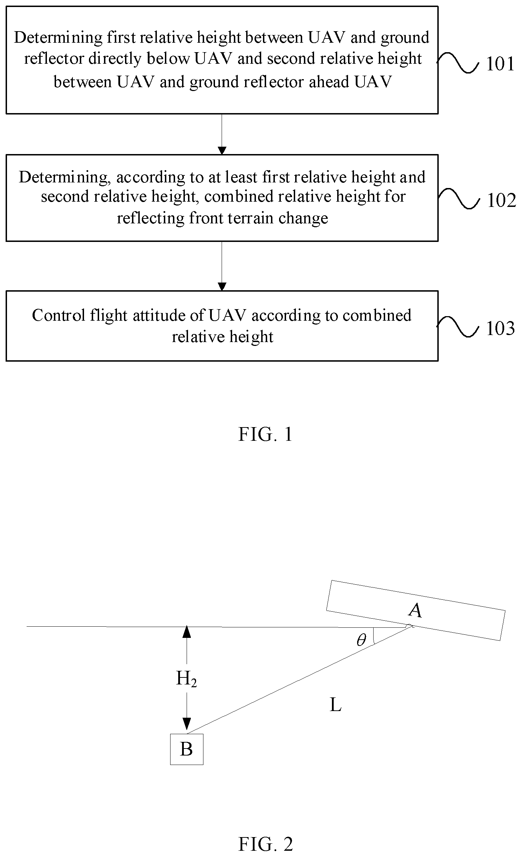

FIG. 1 is a flowchart of a method for controlling an unmanned aerial vehicle according to one embodiment of the present disclosure. The execution entity of the disclosed embodiments may be a controller of a UAV. As shown in FIG. 1, the method in the disclosed embodiment may include:

Step 101: Determine a first relative height between a UAV and a ground reflector directly below the UAV and a second relative height between the UAV and a ground reflector ahead the UAV.

In this step, the UAV may detect the first relative height and the second relative height by a radar mounted on the UAV. It is to be understood that the UAV may also use other devices, such as an ultrasonic detector or a laser radar, to achieve the goal of detecting the relative heights, which are not limited herein. In the disclosed embodiments, the radar may specifically refer to a radar whose antenna is a directional antenna, or may refer to a radar whose antenna is a rotating antenna (i.e., a rotating radar). If the radar specifically refers to a radar whose antenna is a directional antenna, the disclosed radar may include a first radar and a second radar. The first radar vertically emits a radar wave downward, and the first relative height may be determined through the first radar. The second radar tilts forward and downward to emit a radar wave, and the second relative height may be determined by the second radar. If the disclosed radar specifically refers to a rotating radar whose antenna is a rotating antenna, when the rotating radar vertically emits a radar wave downward, the first relative height may be determined by the rotating radar. When the rotating radar tilts forward and downward to emit a radar wave, the second relative height may be determined by the rotating radar.

Optionally, the first radar may be mounted under the rack of an agricultural UAV or under the load of the rack. The second radar may be mounted on the rack of the UAV or the load of the rack in a tilted manner relative to the heading axis of the UAV. Specifically, when a UAV is flying forward, the second radar may be specifically mounted obliquely on the front of the rack or the load. When a UAV is flying backward, the second radar may be specifically mounted obliquely on the back of the rack or the load. The rotating radar may be mounted under the rack of an agricultural UAV or under the load of the rack, where the load of the rack may be, for example, a water tank.

Optionally, Step 101 may specifically include: acquiring a first distance between the UAV and a ground reflector directly below the UAV, and determining the first distance as the first relative height; acquiring, by using the radar on the UAV, a second distance between the UAV and a ground reflector ahead the UAV, and determining the second relative height according to the second distance. Here, determining the second relative height according to the second distance may specifically include determining the second relative height according to the second distance and the angle of the emission direction of the radar wave emitted obliquely and downward by the radar with respect to the horizontal direction. As shown in FIG. 2, A represents a UAV, B represents the ground reflector ahead the UAV A, L represents the distance, between the UAV A and the ground reflector B ahead the UAV A, measured by the radar, and $\theta$ represents the angle of the emission direction of the radar wave, emitted obliquely and downward by the radar, with respect to the horizontal direction. Specifically, according to the distance L and the angle $\theta$, the following Formula (1) may be used to determine the second relative height $H_2$ between the UAV A and the ground reflector B ahead of the UAV A.

$$H_2 = L \times \sin\theta \qquad\qquad (1)$$

It should be noted that the aforementioned radar on a UAV may be understood as a radar that is a part of the UAV or as a radar mounted on the UAV.

Step 102: Determine, according to at least the first relative height and the second relative height, a combined relative height for reflecting a front terrain change.

In this step, since the first relative height refers to a relative height between the UAV and a ground reflector directly below the UAV and the second relative height refers to a relative height between the UAV and the ground reflector ahead the UAV, the combined relative height, determined based on at least the first relative height and the second relative height, may reflect a front terrain change other than the terrain directly below the UAV. It should be noted that the present disclosure does not limit the specific implementations for determining the combined relative height reflecting the front terrain change based on at least the first relative height and the second relative height. Any implementations for determining the combined relative height of the first relative height and the second relative height based on the first relative height and the second relative height shall fall within the protection scope of the present disclosure. For example, the combined relative height may be determined based on the first relative height and the second relative height by using a weighted summation method.

Step 103: Control a flight attitude of the UAV according to the combined relative height.

In this step, the flight attitude may include dive, climb, acceleration, deceleration, and the like. Here, controlling the flight attitude of a UAV according to the combined relative height may allow the UAV to be able to perform a predictive terrain following function. For example, when the combined relative height is relatively large, the flight attitude may be a dive; when the combined relative height is small, the flight attitude may be a climb. For another example, when the combined relative height is relatively large and the difference between the combined relative height and the first relative height is large, the flight attitude may be a dive and acceleration. For another example, when the combined relative height is relatively small and the difference between the combined relative height and the first relative height is large, the flight attitude may be a climb and acceleration. For another example, when the combined relative height is relatively small and the difference between the combined relative height and the first relative height is small, the flight attitude may be a climb and deceleration. It should be noted that the above specific implementations for controlling the flight attitude of a UAV are only for illustrative purposes. Any specific implementation that controls the flight attitude of a UAV according to the combined relative height to allow the UAV to achieve the terrain following function shall fall within the protection scope of the present disclosure.

In the disclosed embodiments, a first relative height between a UAV and a ground reflector directly below the UAV and a second relative height between the UAV and a ground reflector ahead the UAV are determined. A combined relative height reflecting a front terrain change is determined based on at least the first relative height and the second relative height. A flight attitude of the UAV is then controlled according to the combined relative height. In this way, the flight attitude of a UAV is controlled according to the combined relative height reflecting the front terrain change. This allows the UAV to be able to complete the terrain following function well, when the flying speed is too fast or the terrain is quite undulating.

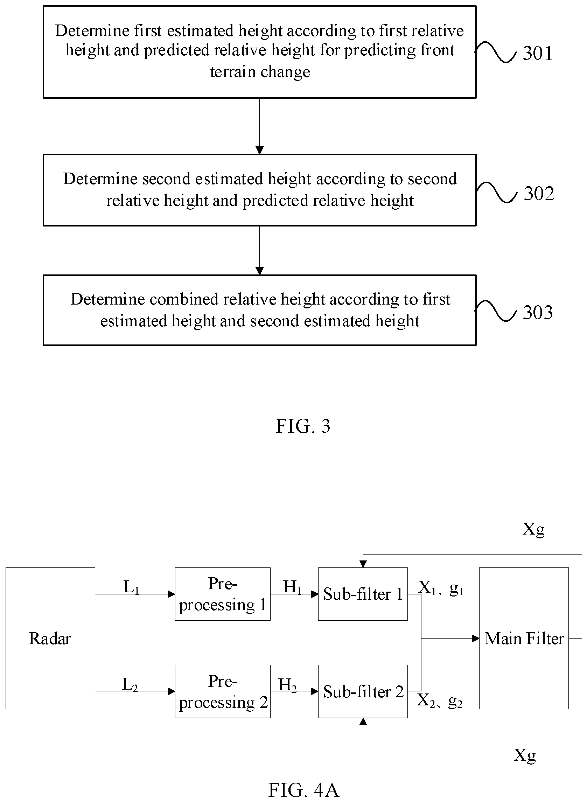

FIG. 3 is a flowchart of a method for controlling a UAV according to another embodiment of the present disclosure. The present embodiment mainly describes, based on the embodiments shown in FIG. 1, a specific implementation for determining a combined relative height reflecting the front terrain change based on at least the first relative height and the second relative height. As shown in FIG. 3, the method in the disclosed embodiments may include:

Step 301: Determine a first estimated height according to the first relative height and a predicted relative height for predicting a front terrain change.

In this step, the predicted relative height may be a relative height predicted by any method for reflecting the front terrain change. Optionally, the predicted relative height may be determined according to the combined relative height of a previous moment, where the combined relative height of the previous moment may be one combined relative height of a previous moment, or a plurality of combined relative heights of previous moments. When the combined relative height of the previous moment is one combined relative height of a previous moment, the predicted relative height may be the combined relative height of the previous moment. When the combined relative height of the previous moment is a plurality of combined relative heights of previous moments, the predicted relative height may be determined by averaging, weighted averaging, or other similar processing of the plurality of combined relative heights.

The present disclosure does not limit the specific implementations for determining a first estimated height according to the first relative height and the predicted relative height for predicting the front terrain change. For example, the first estimated height may be determined based on the first relative height and the predicted relative height by weighted averaging or weighted summation. Optionally, Step 301 may specifically include: using a Kalman filtering algorithm to determining the first estimated height according to the first relative height and the predicted relative height. Specifically, the first relative height is used as a measured value in the Kalman filtering algorithm, and the predicted relative height is used as a predicted value in the Kalman filtering algorithm, and the estimated value calculated by the Kalman filtering algorithm is the first estimated height.

Step 302: Determine a second estimated height according to the second relative height and the predicted relative height.

In this step, the second estimated height is specifically determined, according to the second relative height and the predicted relative height, by using a Kalman filtering algorithm. It should be noted that Step 302 is similar to Step 301, details of which will not be further described herein.

Step 303: Determine the combined relative height according to the first estimated height and the second estimated height.

In this step, the specific implementations for determining the combined relative height according to the first estimated height and the second estimated height are not limited by the present disclosure. For example, the average of the first estimated height and the second estimated height may be used as the combined relative height. Optionally, Step 303 may specifically include: determining the combined relative height according to the first estimated height, a first weight corresponding to the first estimated height, the second estimated height, and a second weight corresponding to the second estimated height. Optionally, the combined relative height may be determined according to the first estimated height, the first weight, the second estimated height, and the second weight by using a weighted summation or a weighted averaging method.

The first weight and the second weight may be predefined or may be dynamically determined, and the present disclosure is not limited thereto. Optionally, the first weight and the second weight may be dynamically determined as follows: determining a first innovation according to the first estimated height and the first relative height; determining a second innovation according to the second estimated height and the second relative height; determining, the first weight and the second weight according to the first innovation and the second innovation, where the larger the first innovation is, the smaller the first weight is and the larger the second weight is, the larger the second innovation is, the larger the first weight is and the smaller the second weight is. It can be seen that, optionally, the sum of the first weight and the second weight may equal to 1. Here, the first innovation may refer to a difference between the first estimated height and the first relative height, and the second innovation may refer to a difference between the second estimated height and the second relative height.

It should be noted that the present disclosure does not limit the specific implementations for determining the first weight and the second weight according to the first innovation and the second innovation. Any specific implementations that satisfy the conditions for determining "the larger the first innovation is, the smaller the first weight is and the larger the second weight is, the larger the second innovation is, the larger the first weight is and the smaller the second weight is" shall fall within the protection scope of the present disclosure. For example, according to the first innovation $g_1$ and the second innovation $g_2$, the first weight $w_1$ may be determined by the following Formula (2), and the second weight $w_2$ may be determined by the following Formula (3).

$$w_1 = g_1^{-1} \times [g_1^{-1} + g_2^{-1}] \qquad (2)$$

$$w_2 = g_2^{-1} \times [g_1^{-1} + g_2^{-1}] \qquad (3)$$

Optionally, the combined relative height $X_g$ may be determined according to the first estimated height $X_1$, the first weight $w_1$, the second estimated height $X_2$, and the second weight $w_2$ by using the following Formula (4).

$$X_g = w_1 * X_1 + w_2 * X_2 \qquad (4)$$

In view of the embodiments illustrated in FIGS. 1 and 3, a method for controlling a UAV in the present disclosure may be, for example, as shown in FIG. 4A. In the figure, $L_1$ represents the first distance, $L_2$ represents the second distance, pre-processing 1 is used to determine the first relative height $H_1$ according to the first distance, and pre-processing 2 is used to determine the second relative height $H_2$ according to the second distance $L_2$, sub-filter 1 is used to determine the first estimated height $X_1$ and the first innovation $g_1$ according to the first relative height $H_1$ and the combined relative height $X_g$ of a previous moment, and the sub-filter 2 is used to determine the second estimated height $X_2$ and the second innovation $g_2$ according to the second relative height $H_2$ and the combined relative height $X_g$ of the previous moment, and the main filter is used to determine the combined relative height $X_g$ according to the first estimated height $X_1$, the second estimated height $X_2$, the first innovation $g_1$, and the second innovation $g_2$.

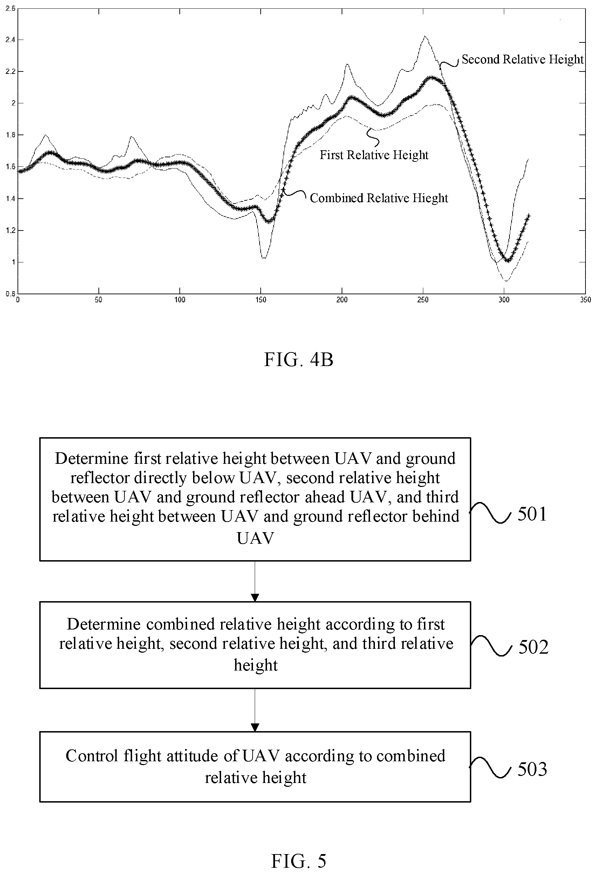

In view of the method for determining the combined relative height in FIG. 4A, the relationship between the first relative height, the second relative height, and the combined relative height may be as shown in FIG. 4B. As can be seen from FIG. 4B, the changing trend of the combined relative height determined based on the first relative height and the second relative height may optimally reflect the front terrain change (i.e., the change of the second relative height) and also reflect the trend of the terrain below (i.e., the trend of the first relative height). This will help prevent instable flights due to the abrupt changes.

In the disclosed embodiments, the first estimated height is determined according to the first relative height and the predicted relative height for predicting the front terrain change, and the second estimated height is determined according to the second relative height and the predicted relative height. The combined relative height is determined according to the first estimated height and the second estimated height. This then allows the combined relative height to be determined according to the first relative height and the second relative height.

FIG. 5 is a flowchart of a method for controlling a UAV according to yet another embodiment of the present disclosure. Based on the embodiment shown in FIG. 1, this embodiment mainly describes an optional implementation for determining the combined relative height for reflecting the front terrain change based on at least the first relative height and the second relative height. As shown in FIG. 5, the method in the disclosed embodiments may include:

Step 501: Determine a first relative height between the UAV and a ground reflector directly below the UAV, a second relative height between the UAV and a ground reflector ahead the UAV, and a third relative height between the UAV and a ground reflector behind the UAV.

In this step, through a radar(s) mounted on a UAV, the UAV may detect the first relative height, the second relative height, and the third relative height. The radar may specifically refer to a radar whose antenna is a directional antenna, or a rotating radar whose antenna is a rotating antenna. If the radar specifically refers to a radar whose antenna is a directional antenna, the radar may include a first radar, a second radar, and a third radar. Here, the first radar vertically emits a radar wave downward, through which the first relative height may be determined. The second radar tilts forward and downward to emit a radar wave, through which the second relative height may be determined. The third radar tilts backward and downward to emit a radar wave, through which the third relative height between the UAV and a ground reflector behind the UAV may be determined. If the radar is specifically a rotating radar, when the rotating radar vertically emits a radar wave downward, the first relative height may be determined through the rotating radar. When the rotating radar tilts forward and downward to emit a radar wave, the second relative height may be determined through the rotating radar. When the rotating radar tilts backward and downward to emit a radar wave, the third relative height may be determined through the rotating radar.

Optionally, the first radar may be mounted under the rack of an agricultural UAV or under the load of the rack. The second radar and the third radar may be mounted on the rack of the UAV or on the load of the rack in obliquely relative to the heading axis of the UAV. Specifically, when the UAV is flying forward, the second radar may be specifically mounted obliquely on the front of the rack or the load, and the third radar may be specifically mounted obliquely on the back of the rack or the load. When the UAV is flying backward, the second radar may be specifically mounted obliquely on the back of the rack or the load, and the third radar may be obliquely mounted on the front of the rack or the load. The rotating radar may be mounted under the rack of the agricultural UAV or under the load of the rack. Here, the load of the rack may be, for example, a water tank. Optionally, if the radar is specifically a rotating radar, the rotating radar may be mounted under the rack of the UAV or on the stand of the UAV.

Optionally, Step 501 may specifically include: acquiring, by using the radar on the UAV, a first distance between the UAV and a ground reflector directly below the UAV, and determining the first distance as the first relative height; acquiring, by using the radar on the UAV, a second distance between the UAV and a ground reflector ahead the UAV, and determining the second relative height according to the second distance; acquiring, by the radar on the UAV, a third distance between the UAV and a ground reflector behind the UAV, and determining the third relative height according to the third distance. It should be noted that the specific ways for determining the third relative height according to the third distance are similar to the specific ways of determining the second relative height according to the second distance shown in FIG. 2, details of which are not described herein again.

It should be noted that for the foregoing radar on a UAV, it can be a radar as a part of the UAV, or a radar that is mounted on the UAV.

Step 502: Determine the combined relative height according to the first relative height, the second relative height, and the third relative height.

In this step, since the terrain generally does not change suddenly, when determining the combined relative height, the third relative height between a UAV and the ground reflector behind the UAV may also be considered. Even for a scene with a sudden change in terrain, the accuracy of determining the combined relative height with the consideration of the third relative height may be ensured by adjusting the importance of the third relative height in determining the combined relative height. For example, for a scene with sudden changes in terrain, the third relative height is less important in determining the combined relative height. For a scene without sudden changes in terrain, the third relative height is more important in determining the combined relative height. It should be noted that the present disclosure does not limit the specific implementations for determining the combined relative height reflecting the front terrain change according to the first relative height, the second relative height, and the third relative height. Any implementations for determining the combined relative height of the first relative height, the second relative height, and the third relative height according to the first relative height, the second relative height, and the third relative height are within the protection scope of the present disclosure. For example, the combined relative height may be determined according to the first relative height, the second relative height, and the third relative height by using a weighted summation method.

Similar to the embodiment shown in FIG. 3 above, Step 502 may specifically include: determining a first estimated height according to the first relative height and the predicted relative height for predicting a front terrain change; determining a second estimated height according to the second relative height and the predicted relative height; determining a third estimated height according to the third relative height and the predicted relative height; and determining the combined relative height according to the first estimated height, the second estimated height, and the third estimated height.

Refer to the embodiments shown in FIG. 3 for specific implementations for determining the first estimated height according to the first relative height and the predicted relative height, and for determining the second estimated height according to the second relative height and the predicted relative height, details of which will not be described herein again. The specific implementations for determining the third estimated height according to the third relative height and the predicted relative height are similar to the specific implementations for determining the first estimated height according to the first relative height and the predicted relative height, details of which are not described herein again.

The present disclosure does not limit the specific implementations for determining the combined relative height according to the first estimated height, the second estimated height, and the third estimated height. For example, an average of the first estimated height, the second estimated height, and the third estimated height may be as the combined relative height. Optionally, the combined relative height may be specifically determined based on the first estimated height, a first weight corresponding to the first estimated height, the second estimated height, a second weight corresponding to the second estimated height, the third estimated height and a third weight corresponding to the third estimated height. Optionally, a weighted summation or a weighted averaging may be used to determine the combined relative height according to the first estimated height, the first weight, the second estimated height, the second weight, the third estimated height, and the third weight.

The first weight, the second weight, and the third weight may be predefined or may be dynamically determined, and the present disclosure is not limited thereto. Optionally, the first weight, the second weight, and the third weight may be dynamically determined as follows: determining a first innovation according to the first estimated height and the first relative height; determining a second innovation according to the second estimated height and the second relative height; determining a third innovation according to the third estimated height and the third relative height; determining the first weight, the second weight, and the third weight according to the first innovation, the second innovation, and the third innovation; where the larger the first innovation is, the smaller the first weight is and the larger the sum of the second weight and the third weight is, the larger the second innovation is, the smaller the second weight is and the larger the sum of the first weight and the third weight is, and the larger the third innovation is, the smaller the third weight is and the larger the sum of the first weight and the second weight is. Optionally, the sum of the first weight, the second weight, and the third weight may equal to 1.

It should be noted that the present disclosure does not limit the specific implementations for determining the first weight, the second weight, and the third weight according to the first innovation, the second innovation, and the third innovation. Any specific implementations that satisfy the conditions for determining "the larger the first innovation is, the smaller the first weight is and the larger the sum of the second weight and the third weight is, the larger the second innovation is, the smaller the second weight is and the larger the sum of the first weight and the third weight is, and the larger the third innovation is, the smaller the third weight is and the larger the sum of the first weight and the second weight is" shall fall within the protection scope of the present disclosure. For example, according to the first innovation $g_1$, the second innovation $g_2$, and the third innovation $g_3$, the first weight $w_1$ may be determined according to the following Formula (5), the second weight $w_2$ may be determined according to the following Formula (6), and the third weight $w_3$ may be determined according to the following Formula (7).

$$w_1 = g_1^{-1} \times [g_1^{-1} + g_2^{-1} + g_3^{-1}] \tag{5}$$

$$w_2 = g_2^{-1} \times [g_1^{-1} + g_2^{-1} + g_3^{-1}] \tag{6}$$

$$w_3 = g_3^{-1} \times [g_1^{-1} + g_2^{-1} + g_3^{-1}] \tag{7}$$

Optionally, the combined relative height $X_g$ may be determined according to the first estimated height $X_1$, the first weight $w_1$, the second estimated height $X_2$, the second weight $w_2$, the third estimated height $X_3$, and the third weight $w_3$ by using the following Formula (8).

$$X_g = w_1 * X_1 + w_2 * X_2 + w_3 * X_3 \tag{8}$$

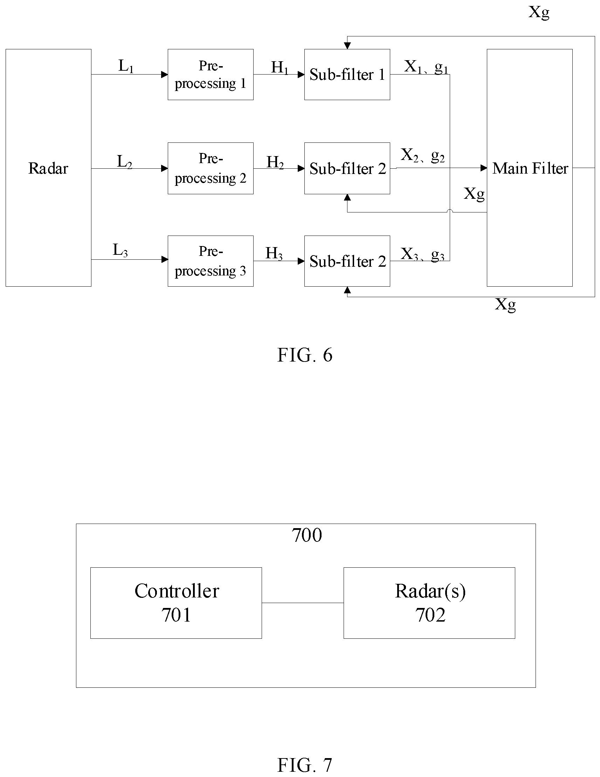

Optionally, a UAV control method of the present disclosure may be, for example, as shown in FIG. 6. In the figure, $L_1$ represents the first distance, $L_2$ represents the second distance, $L_3$ represents the third distance, the pre-processing 1 is used to determine the first relative height $H_1$ according to the first distance, the pre-processing 2 is used to determine the second relative height $H_2$ according to the second distance $L_2$, the pre-processing 3 is to determine the third relative height $H_3$ according to the third distance $L_3$, the sub-filter 1 is for determining the first estimated height $X_1$ and the first innovation $g_1$ according to the first relative height $H_1$ and the combined relative height $X_g$ of a previous moment, the sub-filter 2 is for determining the second estimated height $X_2$ and the second innovation $g_2$ according to the second relative height $H_2$ and the combined relative height $X_g$ of the previous moment, the sub-filter 3 is for determining the third estimated height $X_3$ and the third innovation $g_3$ according to the third relative height $H_3$ and the combined relative height $X_g$ of the previous moment, and the main filter is used to determine the combined relative height $X_g$ according to the first estimated height $X_1$, the second estimated height $X_2$, the third estimated height $X_3$, the first innovation $g_1$, the second innovation $g_2$, and the third innovation $g_3$.

Step 503: Control a flight attitude of the UAV according to the combined relative height.

It should be noted that Step 503 is similar to Step 103, details of which are not described herein again.

In the disclosed embodiments, through the radar(s) on a UAV, the first relative height between the UAV and the ground reflector directly below the UAV, the second relative height between the UAV and the ground reflector ahead the UAV, and the third relative height between the UAV and the ground reflector behind the UAV are determined. According to the first relative height, the second relative height, and the third relative height, the combined relative height for reflecting the front terrain change is determined, and the flight attitude of the UAV is controlled according to the combined relative height. In this way, the flight attitude of the UAV may be controlled according to the combined relative height reflecting the front terrain change. This allows the UAV to perform the terrain following function well when the flying speed is too fast or the terrain is quite undulating.

Optionally, the tilt angle of the obliquely emitted radar wave may be dynamically adjusted according to the time delay of the propulsion system hysteresis effect. Specifically, based on the foregoing embodiments, the method may further include: determining a tilt angle of the radar wave according to the time delay of the propulsion system hysteresis effect of the UAV; and adjusting the emission direction of the radar wave according to the tilt angle. Optionally, when the time delay of the propulsion system hysteresis effect is long, it may indicate that the propulsion system reacts slowly. In order to ensure sufficient reaction time for the propulsion system, it is necessary to know the terrain change of a far distance range ahead. When the time delay of the propulsion system hysteresis effect is short, it may indicate that the propulsion system reacts quickly and the reaction time reserved for the propulsion system may be short, and thus it is only necessary to know the terrain change of a short distance range ahead. Therefore, when the tilt angle of a radar wave is an angle of the emission direction of the radar wave with respect to the horizontal direction, the relationship between the time delay and the tilt angle may be specifically: the longer the time delay is, the smaller the tilt angle is; and the shorter the time delay is, the larger the tilt angle is.

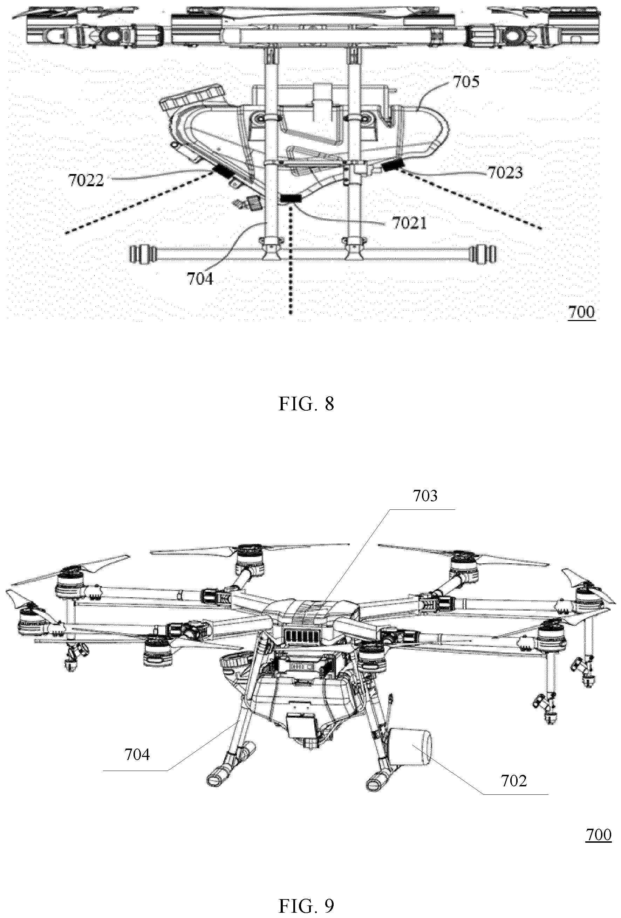

FIG. 7 is a schematic diagram of a UAV according to one embodiment of the present disclosure. FIG. 8 is a schematic structural diagram of a UAV according to one embodiment of the present disclosure. FIG. 9 is a schematic structural diagram of a UAV according to another embodiment of the present disclosure. As shown in FIG. 7 to FIG. 9, the UAV 700 of the disclosed embodiments may include: a controller 707, which is configured to:

determine a first relative height between the UAV and a ground reflector directly below the UAV and a second relative height between the UAV and a ground reflector ahead the UAV;

determine, according to at least the first relative height and the second relative height, a combined relative height for reflecting a front terrain change; and

control a flight attitude of the UAV according to the combined relative height.

Optionally, determining, by the controller 701, the combined relative height for reflecting the front terrain change according to at least the first relative height and the second relative height specifically includes:

determining a first estimated height according to the first relative height and a predicted relative height for predicting the front terrain change;
determining a second estimated height according to the second relative height and the predicted relative height; and
determining the combined relative height according to the first estimated height and the second estimated height.

Optionally, determining, by the controller 701, the combined relative height according to at least the first estimated height and the second estimated height specifically includes:
determining the combined relative height according to the first estimated height, a first weight corresponding to the first estimated height, the second estimated height, and a second weight corresponding to the second estimated height.

Optionally, determining, by the controller 701, the combined relative height according to the first estimated height, the first weight corresponding to the first estimated height, the second estimated height, and the second weight corresponding to the second estimated height specifically includes:
using a weighted summation method to determine the combined relative height according to the first estimated height, the first weight corresponding to the first estimated height, the second estimated height, and the second weight corresponding to the second estimated height.

Optionally, the controller 701 is further configured to:

determine a first innovation according to the first estimated height and the first relative height;
determine a second innovation according to the second estimated height and the second relative height;
determine the first weight and the second weight according to the first innovation and the second innovation;
where the larger the first innovation is, the smaller the first weight is and the larger the second weight is; and the larger the second innovation is, the smaller the second weight is and the larger the first weight is.

Optionally, a sum of the first weight and the second weight is equal to one.

Optionally, the controller 701 is further configured to determine a third relative height between the UAV and a ground reflector behind the UAV; and
where determining, by the controller, the combined relative height for reflecting the front terrain change according to at least the first relative height and the second relative height specifically includes:
determining the combined relative height according to the first relative height, the second relative height, and the third relative height.

Optionally, determining, by the controller 701, the combined relative height according to the first relative height, the second relative height, and the third relative height specifically includes:

determining a first estimated height according to the first relative height and a predicted relative height for predicting the front terrain change;
determining a second estimated height according to the second relative height and the predicted relative height;
determining a third estimated height according to the third relative height and the predicted relative height; and
determining the combined relative height according to the first estimated height, the second estimated height, and the third estimated height.

Optionally, determining, by the controller 701, the combined relative height according to the first estimated height, the second estimated height, and the third estimated height specifically includes:
determining the combined relative height according to the first estimated height, a first weight corresponding to the first estimated height, the second estimated height, a second weight corresponding to the second estimated height, the third estimated height, and a third weight corresponding to the third estimated height.

Optionally, determining, by the controller 701, the combined relative height according to the first estimated height, the first weight corresponding to the first estimated height, the second estimated height, the second weight corresponding to the second estimated height, the third estimated height, and the third weight corresponding to the third estimated height specifically includes:

using a weighted summation method to determine the combined relative height according to the first estimated height, the first weight corresponding to the first estimated height, the second estimated height, the second weight corresponding to the second estimated height, the third estimated height, and the third weight corresponding to the third estimated height.

Optionally, the controller 701 is further configured to:

determine a first innovation according to the first estimated height and the first relative height;
determine a second innovation according to the second estimated height and the second relative height;
determine a third innovation according to the third estimated height and the third relative height; and
determine the first weight, the second weight, and the third weight according to the first innovation, the second innovation, and the third innovation, respectively, where
the larger the first innovation is, the smaller the first weight is and the larger the sum of the second weight and the third weight is;
the larger the second innovation is, the smaller the second weight is and the larger the sum of the third weight and the first weight is; and
the larger the third innovation is, the smaller the third weight is and the larger the sum of the first weight and the second weight is.

Optionally, a sum of the first weight, the second weight, and the third weight is equal to one.
Optionally, the predicted relative height is determined according to the combined relative height of a previous moment.
Optionally, the predicted relative height is the combined relative height of a previous moment.
Optionally, determining, by the controller 701, the first estimated height according to the first relative height and the predicted relative height for predicting the front terrain change specifically includes:

using a Kalman filtering algorithm to determine the first estimated height according to the first relative height and the predicted relative height; and
determining the second estimated height according to the second relative height and the predicted relative height for predicting the front terrain change specifically includes:
using the Kalman filtering algorithm to determine the second estimated height according to the second relative height and the predicted relative height.

Optionally, the UAV 700 of the disclosed embodiments further includes radars 702. The controller 701 is communicationally connected to the radars 702, and determining, by the controller 701, the first relative height between the UAV and the ground reflector directly below the UAV and the second relative height between the UAV and the ground reflector ahead the UAV specifically includes:
using the radars 702 to determine the first relative height between the UAV and the ground reflector directly below the UAV and the second relative height between the UAV and the ground reflector ahead the UAV.
In one implementation, the radars 702 include a first radar 7021 and a second radar 7022. The first relative height between the UAV and the ground reflector directly below the UAV is determined through the first radar 7021, and the first radar 7021 vertically emits a radar wave downward. The second relative height between the UAV and the ground reflector ahead the UAV is determined through the second radar 7022, and the second radar 7022 tilts forward and downward to emit a radar wave.
Optionally, the radars 702 further includes a third radar 7023. The controller 701 is further configured to determine the third relative height between the UAV and a ground reflector behind the UAV through the third radar 7023. The third radar 7023 tilts backward and downward to emit a radar wave
In another implementation, a radar 702 is a rotating radar. Here, when the rotating radar vertically emits a radar wave downward, through the rotating radar, the first relative height between the UAV and the ground reflector directly below the UAV is determined. When the rotating radar tilts forward and downward to emit a radar wave, through the rotating radar, the second relative height between the UAV and the ground reflector ahead the UAV is determined.
Optionally, the controller 701 is further configured to determine the third relative height between the UAV and the ground reflector object behind the UAV through the rotating radar when the rotating radar tilts backward and downward to emit a radar wave.
Optionally, the controller 701 is further configured to determine a tilt angle of a radar wave according to a time delay of a propulsion system hysteresis effect of the UAV, and adjust an emission direction of the radar wave according to the tilt angle.
Optionally, the tilt angle of a radar wave is an angle of an emission direction of the radar wave with respect to a horizontal direction. The longer the time delay is, the smaller the tilt angle is, and the shorter the time delay is, the larger the tilt angle is.
Optionally, a radar 702 is installed on a rack 703, a stand 704, or a load 705 of the rack 703 of the UAV 700.
Optionally, determining, by the controller 701, the first relative height between the UAV and the ground reflector directly below the UAV and the second relative height between the UAV and the ground reflector ahead the UAV specifically includes:

> acquiring a first distance between the UAV and the ground reflector directly below the UAV, and determining the first distance as the first relative height; and
>
> acquiring a second distance between the UAV and a ground reflector ahead the UAV, and determining the second relative height according to the second distance.

Optionally, the UAV in the present disclosure may specifically be a multi-rotor UAV, such as a quadrotor UAV.

It should be noted that, in FIG. 8, the radar is mounted on the load 705 as an example, and in FIG. 9, the radar is mounted on the stand 704 as an example. In the disclosed embodiments, the first radar 7021 vertically emits a radar wave downward, and the radar wave emitted by the first radar 7021 may be represented by a broken line extending from the first radar 7021 in FIG. 8. The second radar 7022 tilts forward and downward to emit a radar wave. The radar wave emitted by the second radar wave may be represented by a dotted line extending from the second radar 7022 in FIG. 8. The third radar 7023 tilts forward and downward to emit a radar wave, and the radar wave emitted by the third radar may be represented by a dotted line extending from the third radar 7023 in FIG. 8.

It should be noted that FIG. 8 and FIG. 9 are merely schematic diagrams showing a physical structure of a UAV, and are not intended to limit the structure of a UAV. The present disclosure does not specifically limit the structure of a UAV.

It should be noted that the first radar, the second radar, and the third radar may be a directional radar or phased array radar. For example, in FIG. 8, the first radar, the second radar, and the third radar are independently configured directional radars. In some embodiments, the first radar, the second radar, and the third radar are integrated together to form a phased array radar.

The controller 701 of a UAV in the disclosed embodiments may be configured to implement the technical solutions of the method embodiments described in FIG. 1, FIG. 3, or FIG. 5. The implementation principles and technical effects are similar, details of which are not described herein again.

One of ordinary skill in the art will appreciate that all or part of the steps to implement the various method embodiments described above may be accomplished by hardware associated with the program and instructions. The program may be stored in a computer readable storage medium. The program, when executed, performs the steps including the foregoing method embodiments. The storage medium includes various media that may store program code, such as a ROM (read-only memory), a RAM (random-access memory), a magnetic disk, or an optical disk.

Finally, it should be noted that the above embodiments are merely illustrative of the technical solutions of the present disclosure, and are not intended to be limiting. Although the present disclosure has been described in detail with reference to the foregoing embodiments, those skilled in the art will understand that the technical solutions described in the foregoing embodiments may be modified, or some or all of the technical features may be equivalently substituted. However, these modifications or substitutions do not make the spirits and principles of the corresponding technical solutions to deviate from the coverage of the technical solutions of the embodiments of the present disclosure.

**Claims**

1. A method for controlling an unmanned aerial vehicle, comprising:

> determining a first relative height between the unmanned aerial vehicle (UAV) and a ground reflector directly below the UAV and a second relative height between the UAV and a ground reflector ahead the UAV;
>
> determining, according to at least the first relative height and the second relative height, a combined relative height for reflecting a front terrain change; and
>
> controlling a flight attitude of the UAV according to the combined relative height.

2. The method according to claim 1, wherein determining the combined relative height for reflecting the front terrain change according to at least the first relative height and the second relative height further includes:

> determining a first estimated height according to the first relative height and a predicted relative height for predicting the front terrain change;
>
> determining a second estimated height according to the second relative height and the predicted relative height; and
>
> determining the combined relative height according to the first estimated height and the second estimated height.

3. The method according to claim 2, wherein determining the combined relative height according to at least the first estimated height and the second estimated height further includes:

determining the combined relative height according to the first estimated height, a first weight corresponding to the first estimated height, the second estimated height, and a second weight corresponding to the second estimated height.

4. The method according to claim 3, wherein determining the combined relative height according to the first estimated height, the first weight corresponding to the first estimated height, the second estimated height, and the second weight corresponding to the second estimated height further includes:

using a weighted summation method to determine the combined relative height according to the first estimated height, the first weight corresponding to the first estimated height, the second estimated height, and the second weight corresponding to the second estimated height.

5. The method according to claim 3 or 4, further comprising:

determining a first innovation according to the first estimated height and the first relative height;
determining a second innovation according to the second estimated height and the second relative height; and
determining the first weight and the second weight according to the first innovation and the second innovation, wherein:
the larger the first innovation is, the smaller the first weight is and the larger the second weight is, and the larger the second innovation is, the smaller the second weight is and the larger the first weight is.

6. The method according to any one of claims 3 to 5, wherein:
a sum of the first weight and the second weight is equal to one.

7. The method according to claim 1, further comprising:

determining a third relative height between the UAV and a ground reflector behind the UAV; and
wherein determining, according to at least the first relative height and the second relative height, the combined relative height for reflecting the front terrain change further includes:
determining the combined relative height according to the first relative height, the second relative height, and the third relative height.

8. The method according to claim 7, wherein determining the combined relative height according to the first relative height, the second relative height, and the third relative height further includes:

determining a first estimated height according to the first relative height and a predicted relative height for predicting the front terrain change;
determining a second estimated height according to the second relative height and the predicted relative height;
determining a third estimated height according to the third relative height and the predicted relative height; and
determining the combined relative height according to the first estimated height, the second estimated height, and the third estimated height.

9. The method according to claim 8, wherein determining the combined relative height according to the first estimated height, the second estimated height, and the third estimated height further includes:
determining the combined relative height according to the first estimated height, a first weight corresponding to the first estimated height, the second estimated height, a second weight corresponding to the second estimated height, the third estimated height, and a third weight corresponding to the third estimated height.

10. The method according to claim 9, wherein determining the combined relative height according to the first estimated height, the first weight corresponding to the first estimated height, the second estimated height, the second weight corresponding to the second estimated height, the third estimated height, and the third weight corresponding to the third estimated height further includes:
using a weighted summation method to determine the combined relative height according to the first estimated height, the first weight corresponding to the first estimated height, the second estimated height, the second weight corresponding to the second estimated height, the third estimated height, and the third weight corresponding to the third estimated height.

11. The method according to claim 9 or 10, further comprising:

determining a first innovation according to the first estimated height and the first relative height;
determining a second innovation according to the second estimated height and the second relative height;
determining a third innovation according to the third estimated height and the third relative height; and
determining the first weight, the second weight, and the third weight according to the first innovation, the second innovation, and the third innovation, respectively, wherein:

the larger the first innovation is, the smaller the first weight is and the larger the sum of the second weight and the third weight is,
the larger the second innovation is, the smaller the second weight is and the larger the sum of the third weight and the first weight is, and
the larger the third innovation is, the smaller the third weight is and the larger the sum of the first weight and the second weight is.

12. The method according to claim 11, wherein:
a sum of the first weight, the second weight, and the third weight is equal to one.

13. The method according to any one of claims 2 to 6 and 8 to 12, wherein the predicted relative height is determined according to a combined relative height of a previous moment.

14. The method according to claim 13, wherein the predicted relative height is the combined relative height of the previous moment.

15. The method according to any one of claims 2 to 6 and 8 to 14, wherein:

determining the first estimated height according to the first relative height and the predicted relative height for predicting the front terrain change further includes:
using a Kalman filtering algorithm to determine the first estimated height according to the first relative height and the predicted relative height; and
determining the second estimated height according to the second relative height and the predicted relative height for predicting the front terrain change further includes:
using the Kalman filtering algorithm to determine the second estimated height according to the second relative height and the predicted relative height.

16. The method according to any one of claims 1 to 15, wherein determining the first relative height between the UAV and the ground reflector directly below the UAV and the second relative height between the UAV and the ground reflector ahead the UAV further includes:
using radars on the UAV to determine the first relative height between the UAV and the ground reflector directly below the UAV and the second relative height between the UAV and the ground reflector ahead the UAV, the radars including a first radar and a second radar, wherein:

the first relative height between the UAV and the ground reflector directly below the UAV is determined through the first radar, and the first radar vertically emits a radar wave downward, and
the second relative height between the UAV and the ground reflector ahead the UAV is determined through the second radar, and the second radar tilts forward and downward to emit a radar wave.

17. The method according to any one of claims 1 to 15, wherein determining the first relative height between the UAV and the ground reflector directly below the UAV and the second relative height between the UAV and the ground reflector ahead the UAV further includes:
using a radar on the UAV to determine the first relative height between the UAV and the ground reflector directly below the UAV and the second relative height between the UAV and the ground reflector ahead the UAV, the radar being a rotating radar, wherein:

the first relative height between the UAV and the ground reflector directly below the UAV is determined by the rotating radar when the rotating radar vertically emits a radar wave downward, and
the second relative height between the UAV and the ground reflector ahead the UAV is determined by the rotating radar when the rotating radar tilts forward and downward to emit a radar wave.

18. The method according to claim 16, wherein the radars further include a third radar, the third radar is used to determine the third relative height between the UAV and the ground reflector behind the UAV, and the third radar tilts backward and downward to emit a radar wave.

19. The method according to claim 17, wherein the rotating radar tilts backward and downward to emit a radar wave, and the third relative height between the UAV and the ground object behind the UAV reflection is determined by the rotating radar.

20. The method according to any one of claims 16 to 19, further comprising:

determining a tilt angle of a radar wave according to a time delay of a propulsion system hysteresis effect of the UAV; and
adjusting an emission direction of the radar wave according to the tilt angle.

21. The method according to claim 20, wherein the tilt angle of a radar wave is an angle of the emission direction of the radar wave with respect to a horizontal direction, the longer the time delay is, the smaller the tilt angle is, and the shorter the time delay is, the larger the tilt angle is.

22. The method according to any one of claims 1 to 21, wherein determining the first relative height between the UAV and the ground reflector directly below the UAV and the second relative height between the UAV and the ground reflector ahead the UAV further includes:

acquiring a first distance between the UAV and the ground reflector directly below the UAV, and determining the first distance as the first relative height; and
acquiring a second distance between the UAV and the ground reflector ahead the UAV, and determining the second relative height according to the second distance.

23. An unmanned aerial vehicle, comprising: a controller, the controller being configured to:

determine a first relative height between the UAV and a ground reflector directly below the UAV and a second relative height between the UAV and a ground reflector ahead the UAV;
determine, according to at least the first relative height and the second relative height, a combined relative height for reflecting a front terrain change; and
control a flight attitude of the UAV according to the combined relative height.

24. The unmanned aerial vehicle according to claim 23, wherein determining, by the controller, the combined relative height for reflecting the front terrain change according to at least the first relative height and the second relative height further includes:

determining a first estimated height according to the first relative height and a predicted relative height for predicting the front terrain change;
determining a second estimated height according to the second relative height and the predicted relative height; and
determining the combined relative height according to the first estimated height and the second estimated height.

25. The unmanned aerial vehicle according to claim 24, wherein determining, by the controller, the combined relative height according to at least the first estimated height and the second estimated height further includes:
determining the combined relative height according to the first estimated height, a first weight corresponding to the first estimated height, the second estimated height, and a second weight corresponding to the second estimated height.

26. The unmanned aerial vehicle according to claim 25, wherein determining, by the controller, the combined relative height according to the first estimated height, the first weight corresponding to the first estimated height, the second estimated height, and the second weight corresponding to the second estimated height further includes:
using a weighted summation method to determine the combined relative height according to the first estimated height, the first weight corresponding to the first estimated height, the second estimated height, and the second weight corresponding to the second estimated height.

27. The unmanned aerial vehicle according to claim 25 or 26, wherein the controller is further configured to:

determine a first innovation according to the first estimated height and the first relative height;
determine a second innovation according to the second estimated height and the second relative height; and
determine the first weight and the second weight according to the first innovation and the second innovation, wherein:

the larger the first innovation is, the smaller the first weight is and the larger the second weight is; and the larger the second innovation is, the smaller the second weight is and the larger the first weight is.

28. The unmanned aerial vehicle according to any one of claims 25 to 27, wherein:
a sum of the first weight and the second weight is equal to one.

29. The unmanned aerial vehicle according to claim 23, wherein the controller is further configured to:

determine a third relative height between the UAV and a ground reflector behind the UAV; and
wherein determining, by the controller, the combined relative height for reflecting the front terrain change according to at least the first relative height and the second relative height further includes:
determining the combined relative height according to the first relative height, the second relative height, and the third relative height.

30. The unmanned aerial vehicle according to claim 29, wherein determining, by the controller, the combined relative height according to the first relative height, the second relative height, and the third relative height further includes:

determining a first estimated height according to the first relative height and a predicted relative height for predicting the front terrain change;
determining a second estimated height according to the second relative height and the predicted relative height;
determining a third estimated height according to the third relative height and the predicted relative height; and
determining the combined relative height according to the first estimated height, the second estimated height, and the third estimated height.

31. The unmanned aerial vehicle according to claim 30, wherein determining, by the controller, the combined relative height according to the first estimated height, the second estimated height, and the third estimated height further includes:
determining the combined relative height according to the first estimated height, a first weight corresponding to the first estimated height, the second estimated height, a second weight corresponding to the second estimated height, the third estimated height, and a third weight corresponding to the third estimated height.

32. The unmanned aerial vehicle according to claim 31, wherein determining, by the controller, the combined relative height according to the first estimated height, the first weight corresponding to the first estimated height, the second estimated height, the second weight corresponding to the second estimated height, the third estimated height, and the third weight corresponding to the third estimated height further includes:
using a weighted summation method to determine the combined relative height according to the first estimated height, the first weight corresponding to the first estimated height, the second estimated height, the second weight corresponding to the second estimated height, the third estimated height, and the third weight corresponding to the third estimated height.

33. The unmanned aerial vehicle according to claim 31 or 32, wherein the controller is further configured to:

determine a first innovation according to the first estimated height and the first relative height;
determine a second innovation according to the second estimated height and the second relative height;
determine a third innovation according to the third estimated height and the third relative height; and
determine the first weight, the second weight, and the third weight according to the first innovation, the second innovation, and the third innovation, respectively, wherein:

the larger the first innovation is, the smaller the first weight is and the larger the sum of the second weight and the third weight is,
the larger the second innovation is, the smaller the second weight is and the larger the sum of the third weight and the first weight is, and
the larger the third innovation is, the smaller the third weight is and the larger the sum of the first weight and the second weight is.

**34.** The unmanned aerial vehicle according to claim 33, wherein:
a sum of the first weight, the second weight, and the third weight is equal to one.

**35.** The unmanned aerial vehicle according to any one of claims 24 to 28 and 30 to 34, wherein the predicted relative height is determined according to a combined relative height of a previous moment.

**36.** The unmanned aerial vehicle according to claim 35, wherein the predicted relative height is the combined relative height of the previous moment.

**37.** The unmanned aerial vehicle according to any one of claims 24 to 28 and 30 to 36, wherein:

determining, by the controller, the first estimated height according to the first relative height and the predicted relative height for predicting the front terrain change further includes:
using a Kalman filtering algorithm to determine the first estimated height according to the first relative height and the predicted relative height; and
determining the second estimated height according to the second relative height and the predicted relative height for predicting the front terrain change further includes:
using the Kalman filtering algorithm to determine the second estimated height according to the second relative height and the predicted relative height.

**38.** The unmanned aerial vehicle according to any one of claims 23 to 37, further comprising: radars, wherein the controller is communicationally connected to the radars, and determining, by the controller, the first relative height between the UAV and the ground reflector directly below the UAV and the second relative height between the UAV and the ground reflector ahead the UAV further includes:
using the radars to determine the first relative height between the UAV and the ground reflector directly below the UAV and the second relative height between the UAV and the ground reflector ahead the UAV, the radars including a first radar and a second radar, wherein:

the first relative height between the UAV and the ground reflector directly below the UAV is determined through the first radar, and the first radar vertically emits a radar wave downward, and
the second relative height between the UAV and the ground reflector ahead the UAV is determined through the second radar, and the second radar tilts forward and downward to emit a radar wave.

**39.** The unmanned aerial vehicle according to any one of claims 23 to 37, further comprising: a radar, wherein the controller is communicationally connected with the radar, and determining, by the controller, the first relative height between the UAV and the ground reflector directly below the UAV and the second relative height between the UAV and the ground reflector ahead the UAV further includes:
using the radar to determine the first relative height between the UAV and the ground reflector directly below the UAV and the second relative height between the UAV and the ground reflector ahead the UAV, the radar being a rotating radar, wherein:

the first relative height between the UAV and the ground reflector directly below the UAV is determined through the rotating radar when the rotating radar vertically emits a radar wave downward, and
the second relative height between the UAV and the ground reflector ahead the UAV is determined through the rotating radar when the rotating radar tilts forward and downward to emit a radar wave.

**40.** The unmanned aerial vehicle according to claim 38, wherein the radars further include a third radar, and the controller is further configured to use the third radar to determine the third relative height between the UAV and the ground reflector behind the UAV, and the third radar tilts backward and downward to emit a radar wave.

**41.** The unmanned aerial vehicle according to claim 39, wherein the controller is further configured to determine the third relative height between the UAV and the ground reflector object behind the UAV through the rotating radar when the rotating radar tilts backward and downward to emit a radar wave.

**42.** The unmanned aerial vehicle according to any one of claims 38 to 41, wherein the controller is further configured to:

determine a tilt angle of a radar wave according to a time delay of a propulsion system hysteresis effect of the UAV; and

adjust an emission direction of the radar wave according to the determined tilt angle.

43. The unmanned aerial vehicle according to claim 42, wherein the determined tilt angle of the radar wave is an angle of the emission direction of the radar wave with respect to a horizontal direction, the longer the time delay is, the smaller the tilt angle is, and the shorter the time delay is, the larger the tilt angle is.

44. The unmanned aerial vehicle according to any one of claims 38 to 43, wherein a radar is mounted on a rack, a stand, or a load of the rack of the UAV.

45. The unmanned aerial vehicle according to any one of claims 23 to 44, wherein determining, by the controller, the first relative height between the UAV and the ground reflector directly below the UAV and the second relative height between the UAV and the ground reflector ahead the UAV further includes:

acquiring a first distance between the UAV and the ground reflector directly below the UAV, and determining the first distance as the first relative height; and
acquiring a second distance between the UAV and the ground reflector ahead the UAV, and determining the second relative height according to the second distance.

Determining first relative height between UAV and ground reflector directly below UAV and second relative height between UAV and ground reflector ahead UAV

$\curvearrowright$ 101

Determining, according to at least first relative height and second relative height, combined relative height for reflecting front terrain change

$\curvearrowright$ 102

Control flight attitude of UAV according to combined relative height

$\curvearrowright$ 103

FIG. 1

FIG. 2

Determine first estimated height according to first relative height and predicted relative height for predicting front terrain change ⌇ 301

Determine second estimated height according to second relative height and predicted relative height ⌇ 302

Determine combined relative height according to first estimated height and second estimated height ⌇ 303

FIG. 3

Xg

Radar

$L_1$ → Pre-processing 1 → $H_1$ → Sub-filter 1 → $X_1$、$g_1$

$L_2$ → Pre-processing 2 → $H_2$ → Sub-filter 2 → $X_2$、$g_2$

Main Filter

Xg

FIG. 4A

FIG. 4B

Determine first relative height between UAV and ground reflector directly below UAV, second relative height between UAV and ground reflector ahead UAV, and third relative height between UAV and ground reflector behind UAV ⟶ 501

Determine combined relative height according to first relative height, second relative height, and third relative height ⟶ 502

Control flight attitude of UAV according to combined relative height ⟶ 503

FIG. 5

Xg

Radar → L₁ → Pre-processing 1 → H₁ → Sub-filter 1 → X₁、g₁ → Main Filter

Radar → L₂ → Pre-processing 2 → H₂ → Sub-filter 2 → X₂、g₂ → Main Filter

Xg

Radar → L₃ → Pre-processing 3 → H₃ → Sub-filter 2 → X₃、g₃ → Main Filter

Xg

FIG. 6

700

Controller
701

Radar(s)
702

FIG. 7

FIG. 8

FIG. 9

## INTERNATIONAL SEARCH REPORT

| International application No. |
|---|
| **PCT/CN2017/117036** |

**A. CLASSIFICATION OF SUBJECT MATTER**

G05D 1/10(2006.01)i

According to International Patent Classification (IPC) or to both national classification and IPC

**B. FIELDS SEARCHED**

Minimum documentation searched (classification system followed by classification symbols)

G05D G01D

Documentation searched other than minimum documentation to the extent that such documents are included in the fields searched

Electronic data base consulted during the international search (name of data base and, where practicable, search terms used)

WPI, EPODOC, CNKI, IEEE, CNPAT: 无人机, 垂直, 水平, 下方, 下面, 前方, 前面, 距离, 高度, 地形, 地貌, 飞行, 控制, 遥控, unmanned, aerial, aircraft, vertical, level, under, distance, front, hight, landform, fly, control, remote control

**C. DOCUMENTS CONSIDERED TO BE RELEVANT**

| Category* | Citation of document, with indication, where appropriate, of the relevant passages | Relevant to claim No. |
|---|---|---|
| X | CN 107087429 A (SHENZHEN QIANHAI CLOUDMINDS TECHNOLOGY CO., LTD.) 22 August 2017 (2017-08-22) <br> description, paragraphs [0005]-[0060] | 1-45 |
| A | CN 105857590 A (NORTHEASTERN UNIVERSITY) 17 August 2016 (2016-08-17) <br> entire document | 1-45 |
| A | CN 105843246 A (SHENZHEN SIMTOO INTELLIGENT TECHNOLOGY CO., LTD.) 10 August 2016 (2016-08-10) <br> entire document | 1-45 |
| A | WO 2016138687 A1 (GUANGZHOU EHANG INTELLIGENT TECH. CO., LTD.) 09 September 2016 (2016-09-09) <br> entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 June 2018** | **06 July 2018** |

| Name and mailing address of the ISA/CN | Authorized officer |
|---|---|
| **State Intellectual Property Office of the P. R. China (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2017/117036**

| Patent document cited in search report | | | Publication date (day/month/year) | Patent family member(s) | | | Publication date (day/month/year) |
|---|---|---|---|---|---|---|---|
| CN | 107087429 | A | 22 August 2017 | US | 2017334568 | A1 | 23 November 2017 |
| | | | | TW | 201734687 | A | 01 October 2017 |
| | | | | WO | 2017161563 | A1 | 28 September 2017 |
| CN | 105857590 | A | 17 August 2016 | None | | | |
| CN | 105843246 | A | 10 August 2016 | None | | | |
| WO | 2016138687 | A1 | 09 September 2016 | CN | 104808674 | A | 29 July 2015 |
| | | | | US | 2018046203 | A1 | 15 February 2018 |

Form PCT/ISA/210 (patent family annex) (January 2015)